Europäisches Patentamt

European Patent Office

Office européen des brevets

(19)

(11) Numéro de publication: **0 149 375**
**B1**

(12) **FASCICULE DE BREVET EUROPEEN**

(45) Date de publication du fascicule du brevet: **12.10.88**

(51) Int. Cl.⁴: **B 23 Q 1/00, F 15 B 11/02**

(21) Numéro de dépôt: **84402284.8**

(22) Date de dépôt: **12.11.84**

(54) **Dispositif porte-pièce à usiner autonome, équipé d'un système de commande, et avantageusement pourvu d'une commande de vérin individualisée pour fonctionner à une pression indépendante.**

(30) Priorité: **25.11.83 FR 8318865**
**10.01.84 FR 8400296**
**12.10.84 FR 8415696**

(43) Date de publication de la demande:
**24.07.85 Bulletin 85/30**

(45) Mention de la délivrance du brevet:
**12.10.88 Bulletin 88/41**

(84) Etats contractants désignés:
**BE CH DE GB IT LI LU NL SE**

(56) Documents cités:
**DE-A-2 132 899**
**DE-A-2 208 982**
**DE-A-2 627 946**
**FR-A-1 082 496**
**FR-A-1 203 923**
**FR-A-1 272 823**
**FR-A-2 109 904**
**FR-A-2 247 632**
**FR-A-2 510 017**
**FR-A-2 518 002**
**US-A-2 563 918**
**US-A-3 796 327**
**US-A-3 854 889**
**US-A-4 174 828**

(73) Titulaire: **MORS**
**4 avenue Vélasquez**
**F-75008 Paris (FR)**

(72) Inventeur: **Casset, Dominique Marie-Bernard**
**Cédex 128 Brannay**
**F-89150 Saint Valerien (FR)**

(74) Mandataire: **Portal, Gérard et al**
**Cabinet Z. Weinstein 20, Avenue de Friedland**
**F-75008 Paris (FR)**

Courier Press, Leamington Spa, England.

EP 0 149 375 B1

## Description

La présente invention concerne essentiellement un dispositif porte-pièce à usiner autonome, tel qu'une palette, de préférence comportant un système de commande; et avantageusement pourvu d'une commande de vérin individualisée pour fonctionner à une pression indépendante.

Les palettes porte-pièce à usiner actuellement connues, par exemple de US-A-4 174 828 sont pourvues de moyens de fixation par serrage, bridage ou analogue de ladite pièce par l'intermédiaire de vérins à fluide comprimé incorporés à ladite palette, et alimentées par un générateur de pression de fluide actionné par une source de puissance.

Dans les palettes porte-pièce à usiner, courantes, le générateur de pression de fluide ainsi que la source de puissance sont disposés à l'écart de la palette porte-pièce et même dans certains cas à l'extérieur à l'extérieur de l'ensemble d'usinage. Le générateur de pression de fluide alimente les moyens de fixation par des flexibles reliant le générateur de pression aux moyens de fixation.

Ces solutions connues présentent ainsi l'inconvénient majeur d'un encombrement de l'espace par le passage des flexibles qui peuvent être détériorés ou coupés par inadvertance.

D'autre part, la disposition séparée du générateur de pression de fluide et de la source de puissance augmente l'encombrement de l'ensemble d'usinage.

Par ailleurs, les systèmes de commande connus pour les dispositifs porte-pièce à usiner utilisent des voies de transmission d'ordre ou de commande provenant d'un dispositif de commande extérieur, qui sont formées par des liens physiques tels que des fils ou câbles électriques. On comprend aisément que la présence de tels fils ou câbles est gênante, surtout quand le nombre des dispositifs porte-pièce est relativement important.

Enfin, selon ces dispositifs porte-pièce connus, tous les vérins sont alimentés simultanément à la même pression ce qui présente l'inconvénient majeur d'aboutir également à une libération simultanée de la pression dans tous les vérins. D'autre part, ce fonctionnement à une pression unique oblige d'utiliser comme organe de puissance des vérins simple effet.

Le brevet FR-A-2 510 017 décrit une palette porte-pièce adaptée pour éviter autant que possible la présence de flexibles hydrauliques d'alimentation.

Pour cela, un robinet spécial d'isolement est inséré en tête du circuit de fluide pour l'admission de pression hydraulique au cylindre hydraulique de chaque dispositif de blocage de la pièce à insérer sur la palette. Un tel robinet permet le débranchement des flexibles hydrauliques venant de la source de pression hydraulique.

Cependant, la présence de robinet spécial ci-dessus complique la structure générale de la palette. De plus, avant le transport de la palette sur la table de travail par exemple d'une machine-outil, l'entrée du robinet d'isolement est raccordée à une extrémité d'un flexible hydraulique d'alimentation qui peut être détérioré ou coupé par inadvertance, l'autre extrémité du flexible étant raccordée à un dispositif d'alimentation en pression hydraulique installé sur la table de travail indépendamment de la palette.

La présente invention a donc pour but de fournir un dispositif formant palette porte-pièce à usiner éliminant la présence de flexibles d'alimentation des moyens de fixation hors de l'espace occupé par le dispositif lui-même et évitant l'encombrement antérieur du générateur de pression de fluide et de la source de puissance.

En outre, la présente invention a également pour but de prévoir un système de commande du dispositif formant palette sans liens physiques tels que des fils ou câbles électriques.

La présente invention propose de plus un dispositif porte-pièce à usiner selon lequel chaque organe de puissance, en général constitué par un vérin, puisse être alimenté individuellement à une pression déterminée de manière à fonctionner à une pression indépendante de celle de fonctionnement des autres vérins et/ou à des moments différents.

Enfin, la présente invention résoud également le problème technique supplémentaire consistant à rendre possible un fonctionnement de chacun des organes de puissance, habituellement constitué par un vérin, à au moins deux pressions différentes.

Afin de résoudre les problèmes techniques mentionnés précédemment, l'invention propose un dispositif formant palette porte-pièce à usiner, du type comprenant des vérins à fluide comprimé incorporés dans la palette; des moyens de fixation par serrage ou bridage de la pièce sur la face supérieure de la palette par l'intermédiaire des vérins; un générateur de pression de fluide alimentant les vérins à travers un circuit de fluide comprimé et une source de puissance d'actionnement du générateur de pression de fluide; et caractérisé en ce que le générateur de pression de fluide et la source de puissance sont chacun incorporé dans un logement ou évidemment correspondant pratiqué dans la palette, en ce que le circuit de fluide comprimé comprend un circuit intégré formé par des canaux communiquants réalisés dans la masse de la palette, le générateur de pression de fluide étant télécommandé par un poste central de commande séparé à dispositif de liaison par rayons infra-rouge.

Selon une caractéristique de l'invention, le dispositif comprend au moins un ensemble de délivrance du fluide comprimé à une pression déterminée, individuellement associée à un des vérins précités de sorte que chaque vérin fonctionne à une pression indépendante de celle de fonctionnement des autres vérins et/ou à des moments différents.

Selon une autre caractéristique de l'invention, le dispositif comprend au moins deux ensembles à clapets précités par vérin de sorte que chaque vérin peut fonctionner à au moins deux pressions différentes.

Chaque ensemble précité comprend trois clapets anti-retour dont deux sont pilotés, de préférence par électro-aimant.

Selon une caractéristique particulièrement avantageuse, chaque électro-aimant de chaque clapet piloté précité est actionné automatiquement de préférence en étant commandé par le poste central de commande qui est pourvu du dispositif de liaison à rayons infra-rouge.

D'autres buts, caractéristiques et avantages apparaîtront clairement à la lumière de la description explicative faite en référence aux dessins annexés représentant plusieurs modes de réalisation actuellement préférés du dispositif selon l'invention donnés simplement à titre d'illustration et qui ne sauraient donc en aucune façon limiter la portée de l'invention. Dans les dessins.

La figure 1 est une vue en perspective d'un dispositif formant palette autonome selon la présente invention;

La figure 2 est une vue de dessous de la palette représentée à la figure 1;

La figure 3 est une vue en coupe selon la ligne de trace III-III de la figure 2;

La figure 4 représente une vue schématique des ensembles à clapet de délivrance du fluide comprimé à une pression déterminée selon l'invention, qui sont prévus pour être réalisés sur le dispositif porte-pièce représenté aux figures 1 à 3;

La figure 5 représente un deuxième mode de réalisation de l'ensemble représenté sur la figure 4 du dispositif porte-pièce, présentant la partie essentielle qui est différente relativement au mode de réalisation de la figure 4; et

La figure 6 représente un système de commande selon la présente invention, d'un ou de plusieurs dispositifs porte-pièce tels que ceux représentés aux figures 1 à 5.

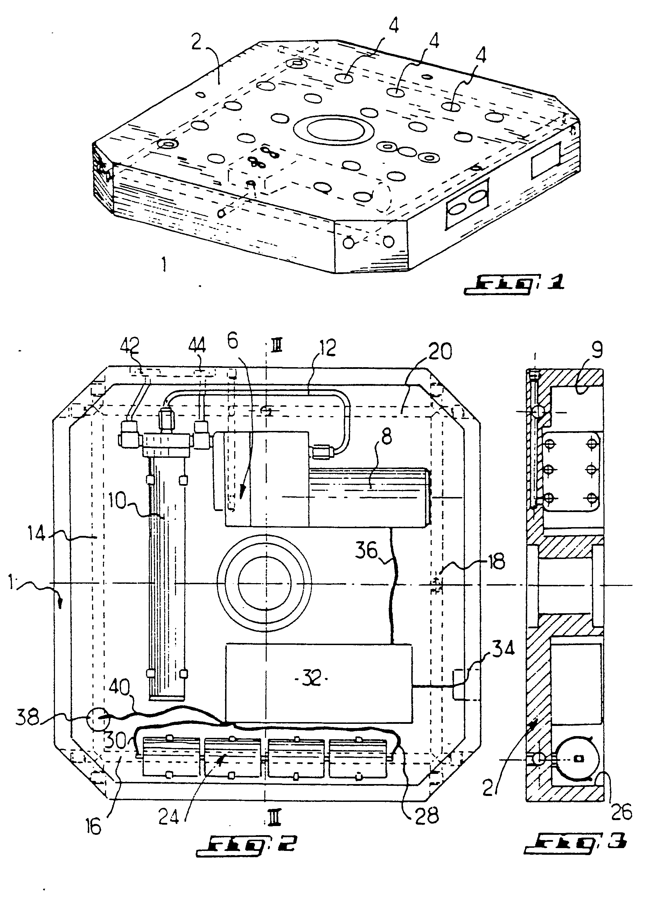

En référence aux figures 1 à 3, la palette porte-pièce désignée par le numéro de référence général 1 comporte sur sa face supérieure 2 une pluralité d'orifices 4 permettant d'y solidariser des moyens de fixation (non représentés) par serrage, bridage ou analogue de la pièce à usiner.

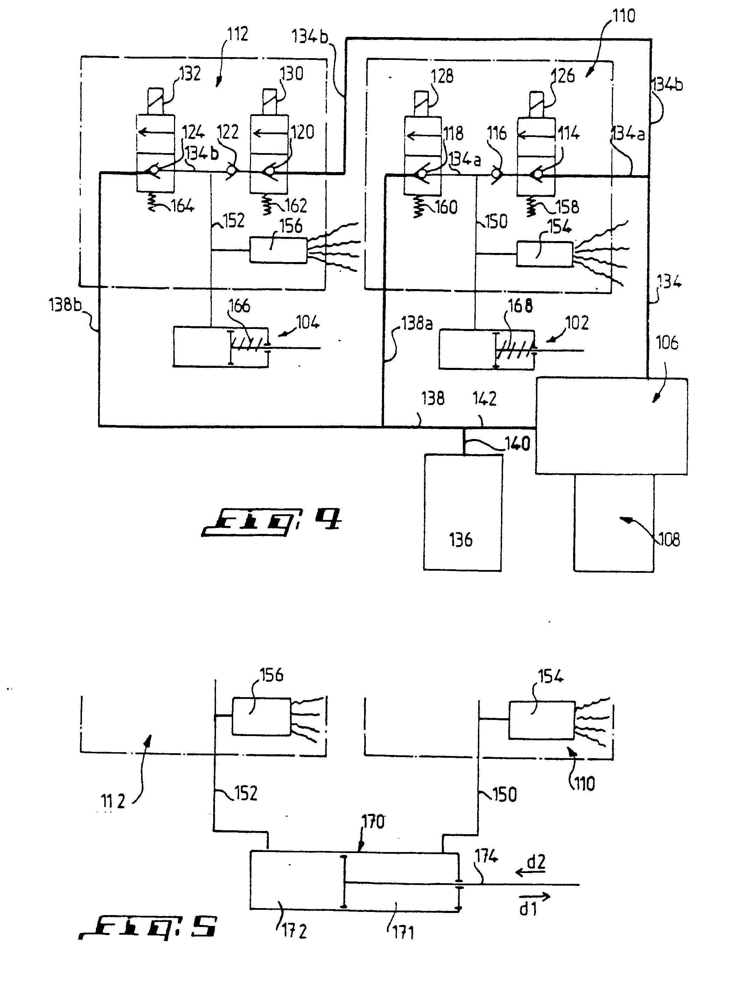

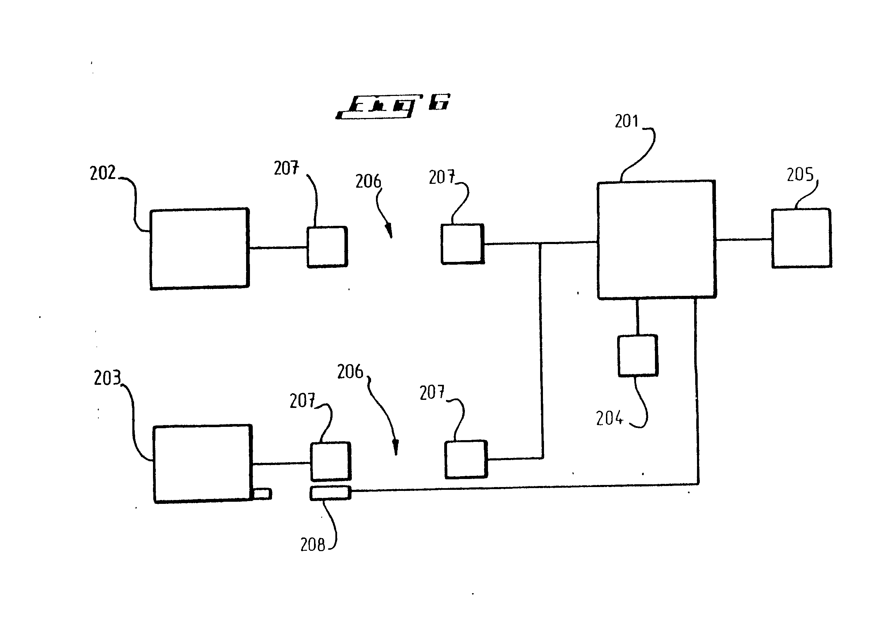

Avec ces moyens de fixation, ou dans d'autres orifices réalisés à la face supérieure 2 de la palette 1, sont prévus des vérins (non représentés pour la clarté du dessin mais qui sont représentés à la figure 4 et désignés par les numéros de repère généraux 102, 104) à fluide comprimé.

Ces vérins sont alimentés par un générateur de pression de fluide actionné par une source de puissance.

Le générateur de pression, clairement visible à la figure 2 et représenté par le numéro de référence général 6, est incorporé dans la palette 1, dans un ou plusieurs logements ou évidements tels que 9 que l'on voit clairement à la figure 3.

Ce générateur de pression comprend par exemple selon le mode de réalisation représenté, un groupe électro-hydraulique 8 constitué par un groupe moto-pompe. Le fluide ici hydraulique provient d'un réservoir 10 également incorporé dans la palette 1, dans un évidemment correspondant à celle-ci.

Selon le mode de réalisation représenté, on peut voir que des flexibles d'alimentation en fluide sont incorporés dans la palette 2 tels que les flexibles 12 et/ou sont constitués par un circuit intégré formé par des canaux tels que 14, 16, 18, 20 communiquants réalisés dans la masse de la palette 1, comme cela se conçoit bien à partir des figures 1 à 3.

Selon un mode de réalisation représenté, la source de puissance 24 est également incorporée dans la palette 2, en étant elle aussi disposée dans un logement ou évidemment 26 (figure 3) de la palette 2. Naturellement, la source de puissance 24 est reliée par des connecteurs 28, 30, par exemple à un groupe de commande électronique 32, de préférence commandé par micro-ordinateur, micro-processeur ou analogue par une connexion en 34, ce qui permet de commander le générateur de pression 6 par une autre connexion 36. Un mode de réalisation préféré de cette connexion sera décrit plus loin, en liaison avec la figure 6.

Dans l'exemple représenté, la source de puissance est formée par des batteries d'accumulateur électrique rechargeables, qui sont également échangeables à volonté.

On a également représenté à la figure 2 un capteur de pression 38 relié par un connecteur 40 au groupe électronique 32 ainsi qu'une arrivée 42 et une sortie 44 de fluide hydraulique connectab-les à volonté avec une source annexe de fluide.

On conçoit ainsi qu'avec la palette selon la réalisation représenté, on obtient une palette porte-pièce à usiner entièrement autonome, d'un encombrement réduit, ne laissant dépasser à l'extérieur de la palette essentiellement aucun flexible qui puisse être détérioré ou coupé par inadvertance.

D'autre part, et en référence à la figure 4, un autre mode de réalisation du dispositif porte-pièce à usiner comprend des moyens de fixation par serrage, bridage ou analogue (non représentés), de ladite pièce par l'intermédiaire d'organes de puissance consistant habituellement en un ou plusieurs vérins 102, 104 à fluide comprimé incorporés au dispositif almentés par un générateur de pression de fluide 106, actionné par une source de puissance 108.

Le dispositif comprend au moins un ensemble 110, 112, à clapets 114, 116, 118; 120, 122, 124 de délivrance dudit fluide comprimé à une pression déterminée, individuellement associée à un desdit vérins 102, 104, respectivement, de sorte que chaque vérin 102, 104 fonctionne à une pression independante de celle de fonctionnement des autres vérins et/ou à des moments différents.

Selon une particularité du dispositif, chaque ensemble 110, 112, comprend trois clapets anti-retour 114, 116, 118: 120, 122, 124, respectivement, dont deux sont pilotés, de préférence par des électro-aimants 126, 128; 130, 132. Ainsi, les clapets anti-retour pilotés constituent en quelque sorte des électro-vannes.

Comme cela est clairement visible à la figure 4, ce dispositif comprend encore un circuit de fluide comprimé comprenant un conduit 134 d'alimentation de fluide comprimé reliant la sortie du générateur de puissance 106, alimenté en fluide depuis une réserve de fluide 136, à un ou plusieurs vérins 102, 104 et un conduit 138 de retour de fluide comprimé reliant la sortie dudit ou desdits vérins 102, 104, à ladite réserve de fluide 136. En pratique, le conduit de retour 138 fusionne avec le conduit 140 d'alimentation de fluide depuis la réserve 136 au générateur de puissance 106 par un conduit commun d'alimentation 142.

Chaque conduit d'alimentation 134 et de retour 138 est subdivisé respectivement en canaux d'alimentation (134a, 134b) et de retour (138a, 138b) de fluide à, et de, chaque ensemble précité 110, 112 comme cela se conçoit bien à partir de la figure 4.

D'autre part, comme on peut le remarquer à partir de la figure 4, chaque canal d'alimentation 134a, 134b de chaque ensemble 110, 112 aboutit à un premier clapet anti-retour, 114, 120, respectivement, piloté, de préférence par électro-aimant 126, 130 respectivement. Après ce premier clapet piloté 114, 120, est disposé un clapet classique anti-retour 116, 122, respectivement, disposé en opposition du premier clapet piloté 114, 120.

A la suite de ce clapet anti-retour simple 116, 122, le canal d'alimentation 134a; 134b de chaque ensemble 110, 112, est dérivé par un conduit 150, 152 d'alimentation à, et de retour, de fluide comprimé aux vérins 102, 104.

D'autre part, en aval de ce canal en dérivation 150, 152, est disposé le troisième clapet anti-retour 118, 124 de chaque ensemble 110, 112 qui est le deuxième clapet piloté, de préférence par électro-aimant 128, 132, respectivement.

On observera d'autre part que selon le mode de réalisation de la figure 4, chaque vérin 102, 104 est un vérin simple effet. En outre, sur le conduit en dérivation 150, 152, on prévoit la présence d'un dispositif 154, 156 capteur de pression dans le condut de dérivation 150, 152, respectivement, émettant une information en relation à la pression dans le conduit 150, 152, qui est de préférence transmis et pris en compte par une unité de traitement de l'information.

Ainsi, et comme précédemment indiqué, chaque électro-aimant 126, 128, 130, 132 est avantageusement actionné automatiquement de préférence en étant commandé par un poste central de commande. Celui-ci peut être avantageusement pourvu d'un dispositif de liaison par dispositif infrarouqe qui peut être constitué par celui qui sera décrit en référence à la figure 6.

Ainsi également de préférence, le poste central peut être équipé d'une unité de traitement de l'information, de préférence un microprocesseur, de préférence également adapté pour être relié soit à un dispositif à commande manuelle, soit à un centre de commande numérique tel qu'un automate programmable ou à une machine à commande numérique, comme celle qui sera décrite en référence à la figure 6.

Chaque ensemble 110, 112 est incorporé au dispositif porte-pièce qui est ainsi autonome, comme celui décrit en référence aux figures 1 à 3.

Naturellement, chaque clapet anti-retour comporte des moyens de rappel élastique habituels, tels que des ressorts 158, 160, 162, 164.

Le fonctionnement de ce dispositif est le suivant.

A) Programmation du capteur de pression 156 à une pression X1, et donc du conduit en dérivation 152 à cette même pression X1, sans agir sur le conduit en dérivation 150 d'alimentation du vérin 102.

Simultanément, on réalise la mise en route de la centrale hydraulique 106 et la mise sous tension de l'électro-aimant 130 du clapet piloté 120. Le fluide sous pression passe par le clapet simple 122, ne peut passer par le clapet anti-retour 124 qui est fermé et va donc par le conduit en dérivation 152 alimenter le vérin 104, qui est alors actionné.

Une fois la pression X1 atteinte, cette information est transmise par le capteur et prise en compte par l'unité de traitement d'informations qui commande l'arrêt simultané de l'électro-aimant 130 et donc la fermeture du clapet piloté 120, et de la centrale hydraulique 106. Naturellement, le clapet piloté 114 de l'autre ensemble 110 ayant été maintenu fermé, aucune action n'a eu lieu sur le vérin 102 associé à l'autre ensemble 110.

Le capteur 156 informe en permanence de l'état de la pression dans le conduit en dérivation 152. Si la pression chute d'une valeur trop importante, il y a simultanément remise en route de la centrale hydraulique 106 et ouverture du clapet piloté 120 par l'électro-aimant 130, afin de revenir à la pression initiale $X_1$.

B) Programmation de l'autre vérin à une pression X2, c'est-à-dire du capteur 154 à cette pression X2 sans agir sur l'autre vérin 104.

Il suffit simultanément de mettre en route la centrale hdraulique 106 et d'ouvrir le clapet piloté 114. A la pression X2, le capteur 154 provoque l'arrêt simultané de la centrale 106 et de l'électro-aimant 126 en fermant ainsi le clapet piloté 114 sous l'action du ressort de rappel 158.

C) Annulation de pression dans les conduits 152 et 150.

a) Chute de pression dans le conduit 152, le conduit 150 restant sous pression

Il suffit de réaliser l'excitation de l'électro-aimant 132 ce qui provoque l'ouverture du clapet anti-retour piloté 124. L'action du ressort classique 166 du vérin simple effet l04 provoque le retour du fluide par le canal de retour 138b et le conduit de retour 138 vers le réservoir 136 puisque la centrale hydraulique l06 ne fonctionne pas.

b) Chute depression dans le conduit 150 d'alimentation du vérin 102, l'autre vérin l04 étant à la pression zéro.

On réalise l'excitation de l'électro-aimant 128 ce qui provoque l'ouverture du clapet anti-retour 118. De même, l'action du ressort classique 168 du vérin 102 simple effet provoque le retour du fluide par le canal de retour 138a et le conduit de retour 138, au réservoir 136.

On conçoit aisément qu'ainsi le dispositif permet de faire fonctionner chaque vérin 102, 104 à une pression indépendante de celle de fonctionnement des autres vérins et/ou à des moments différents, ce qui ne pouvait pas être atteint par les dispositifs.

En référence à la figure 5, on a représenté un deuxième mode de réalisation du dispositif qui se différencie de celui de la figure 4 par le fait qu'il comprend un vérin 170 à double effet 171, 172, respectivement.

Ainsi, dans ce mode de réalisation, chaque effet 171, 172 est alimenté par un ensemble de délivrance de pression précité 110, 112. De ce fait, on observera que le conduit en dérivation précité 150 de l'ensemble 110 aboutit à un effet 171 tandis que le conduit de dérivation 152 de l'autre ensemble 112 aboutit à l'autre effet 172.

Le fonctionnement de ce deuxième mode de réalisation est le suivant:

a) si on veut déplacer la tige de vérin 174 dans la direction $d_1$ à une pression X1, il y a simultanément une mise en route de la centrale hydraulique 106 et mise sous tension de la bobine de l'électro-aimant 130 et de l'électro-aimant 128. Ainsi, le clapet piloté 120 est ouvert et le fluide passe par le clapet classique 122 et pénètre sous pression dans la chambre de l'effet 172 du vérin 170. Le fluide enfermé dans l'autre chambre de l'effet 171 est refoulé par le conduit 150 vers le clapet piloté 118 qui est ouvert par une mise sous tension de l'électro-aimant 128 de sorte que ce fluide retourne directement par le canal 138a au réservoir de fluide 136.

Quand le capteur 156 a lu la pression sélectionnée X1 dans la chambre de l'effet 172, il y a arrêt simultané de la centrale hydraulique 106 et du courant dans les bobines d'électro-aimant 130 et 128 et fermeture des clapets pilotés 120 et 118.

b) déplacement de la tige 174 de vérin 170 dans la direction $d_2$ à une pression X2.

On réalise tout d'abord la mise sous tension de la bobine de l'électro-aimant en provoquant ainsi l'ouverture du clapet 124 en aboutissant alors à une fuite de pression dans la chambre de l'effet 172.

On réalise en outre une mise en route simultanée de la centrale hydraulique 106 et une mise sous tension de la bobine 126 en provoquant l'ouverture du clapet 114. Le fluide passe par le clapet 116 et rentre sous pression dans la chambre de l'autre effet 171. Le fluide dans la chambre 172 passe ainsi par le clapet 124 qui est ouvert et retourne dans le réservoir 136.

Quand la pression X2 est atteinte dans la chambre de l'autre effet 171, ce qui est détecté par le capteur 154, le poste central commande l'arrêt simultané de la centrale hydraulique 106 et du courant dans les bobines 126 et 132, en provoquant ainsi la fermeture des clapets 114 et 124 par l'intermédiaire des ressorts de rappel 158 et 164.

On conçoit ainsi que chaque vérin fonctionne à deux pressions différentes.

On conçoit aisément également que si l'on multiplie le nombre d'ensembles pour chaque effet, sur un même principe, on aboutira à un fonctionnement de chaque effet à un nombre de pressions différentes qui est égal au nombre d'ensembles prévus pour chaque effet.

Une telle réalisation permet donc d'aboutir à un fonctionnement de chaque vérin à autant de pressions différentes que l'on veut et/ou à des moments qui peuvent être différents sans aucune limitation dans le temps.

Il est très avantageux, que le dispositif porte-pièce est autonome. On obtient également une miniaturisation importante.

En référence à la figure 6, on a représenté un système de commande selon un mode préféré qui comprend un poste central 201 formant un poste fixe et un certain nombre de postes mobiles dont seulement deux postes 202 et 203 sont représentés. Chaque poste comporte l'agencement électronique de commande des vérins à fluide comprimé pour l'actionnement des moyens de fixation par serrage, bridage ou analogue, des pièces à usiner et qui ont été précédemment décrits.

Le poste central 201 est adapté pour piloter les postes mobiles 202, 203. A cette fin, le poste central comprend une unité centrale de traitement d'information, avantageusement un microprocesseur, et un dispositif de commande manuelle extérieur 204 permettant de définir le poste mobile auquel des ordres doivent être transmis, les opérations de travail à accomplir dans le dispositif porte-pièce correspondant, tel que, par exemple, l'effort de serrage ou de desserrage que doivent produire les vérins du dispositif. Le dispositif de commande 204 peut être réalisé de toute manière appropriée. Il peut comprendre avantageusement des roues codeuses et une touche de validation de lecture de ces roues. On pourrait également prévoir une interface B, C, D (décimale codée binaire). Ces mesures permettent l'entrée du numéro des postes mobiles à piloter et l'entrée des pressions de serrage ou de desserrage.

Il est avantageux d'adapter le poste central 201 pour qu'il puisse être relié à un centre de commande numérique externe 205, tel qu'un automate programmable ou une machine à commande numérique.

Le poste central comporte en outre des moyens d'alarme formés par exemple par des diodes électro-luminescentes (non représentées), qui sont agencées pour afficher toutes anormalités dans le fonctionnement du dispositif porte-pièce à usiner, pilotés par le poste central. Bien entendu, ce dernier peut être équipé d'autres moyens appropriés pour assurer le fonctionnement parfait et la sécurité du système de commande et du dispositif porte-pièce.

Concernant les postes mobiles 202, 203, il est à noter qu'un tel poste comporte également avantageusement une unité centrale de traitement tel qu'un microprocesseur (non représenté), destiné à dialoguer avec le poste central pour assurer le pilotage correct des vérins du dispositif porte-pièce et pour signaler au poste central toutes anormalités dans le fonctionnement de ce dispositif. Bien entendu, on pourrait prévoir dans les postes mobiles tous moyens appropriés destinés à garantir le fonctionnement correct et sûr du dispositif porte-pièce correspondant.

Les dialogues entre le poste central fixe 201 et chaque poste mobile 202, 203 se font à l'aide d'un dispositif de liaison bi-directionnelle pur rayons infra-rouges 206. A cette fin le poste central et les postes mobiles comportent chacun un ensemble émetteur-récepteur de rayons infra-rouges 207. Les postes peuvent donc dialoguer sans qu'il existe un lien physique entre eux. Dans ce même but, c'est-à-dire pour éviter des liaisons physiques permanentes, le poste mobile 203 est par exemple connectable au poste central 201, plus précisément à une borne de rechargement 208, des batteries d'accumulateurs électriques prévus dans le dispositif porte-pièce, précédemment décrites.

On comprend donc de la description précédente que la présente invention permet de résoudre tous les problèmes techniques précédemment énoncés ainsi que d'autres problèmes techniques qui apparaîtront à l'homme du métier en particulier à partir de la description précédente. En particulier, d'autres avantages techniques obtenus par la présente invention sont les suivants:

Le dispositif porte-pièce autonome à serrage programmable est un ensemble compact autonome, c'est-à-dire sans liaison physique extérieure, qui permet par l'abjonction d'un outillage hydraulique de brider des pièces en vue d'un usinage notamment par enlèvement de métal.

Il est destiné à être monté ou inséré sur une table de machine-outil devant se déplacer sur de grandes distances genre palettes de centre d'usinage, palettes de tour vertical ou palettes d'atelier flexible.

Le principe de base du dispositif selon l'invention est de transformer une source d'énergie électrique accumulée dans des batteries ou analogues en énergie hydraulique programmable.

Cette programmation peut se faire manuellement par des touches de sélection d'un boîtier électronique (poste fixe) extérieur à l'ensemble porte-pièce autonome non relié physiquement à ce dernier. Les dialogues se font de préférence par émission de faisceaux infrarouge. La programmation peut se faire en automatique par l'intermédiaire dun automate programmable, d'un ordinateur, d'une centrale numérique de commande de machine-outil ou d'un robot de chargement automatique de pièces qui seront reliées directement au boîtier électronique (poste fixe).

— L'invention offre l'avantage de permettre d'augmenter ou de diminuer à distance une pression sans passer par le point 0 (desserrage ou surserrage programmé).

— L'invention permet de surveiller en permanence la pression dans les circuits hydrauliques et de compenser immédiatement si celle-ci venait à diminuer. Si cette chute de pression devenait trop importante, grâce à la liaison infra-rouge émettrice-réceptrice en double sens, le boîtier extérieur (poste fixe) déclencherait immédiatement une alarme ou l'arrêt de la machine.

— Le dispositif porte-pièce autonome selon l'invention à serrage programmable comporte de préférence sur lui même un bouton de serrage (monté en pression) et un bouton de desserage (pression nulle) qui permet une autonomie complète de l'ensemble sans passer par le coffret électronique extérieur (poste fixe).

— En cours d'usinage pour des raisons de déformation et de précision on peut diminuer progressivement la pression sans relâcher complètement la pièce. Ceci permet dans un premier temps de brider efficacement une pièce afin de pratiquer un usinage d'ébauche, dans un deuxième temps de relâcher partiellement le bridage en usinage de finition afin de faire subir à la pièce à usiner le moins de contraintes possibles. Ceci permet d'augmenter la précision d'usinage.

— L'interface (poste fixe) à l'extérieur de l'ensemble autonome peut être relié à un automate programmable, une centrale numérique de commande de machines ou un ordinateur afin de programmer plusieurs ensembles ou dispositifs porte-pièce autonomes simultanément ou séparément à des valeurs de pression identiques ou différentes.

— L'invention offre l'avantage supplémentaire de permet tre de programmer sur un même ensemble porte-pièce autonome une ou plusieurs sorties hydrauliques complètement indépendantes en valeur de pression ainsi qu'en ordre d'ouverture et fermeture de chaque circuit. Ceci permet de brider séparément plusieurs pièces sur un même dispositif porte-pièce autonome ou éventuellement d'actionner des vérins double-effet.

— L'interface (poste fixe) permet par la liaison infra-rouge d'identifier dans le dispositif porte-pièce autonome chaque cause éventuelle d'incident, tel que manque de charge de batterie, incident mécanique (grippage éventuel mécanique pompe-vérin), manque d'huile, défaut de liaison infra-rouge, perte d'huile.

— Enfin, le dispositif porte-pièce selon l'invention ne comporte aucune tuyauterie, tous les circuits hydrauliques sont intégrés dans le dispositif porte-pièce autonome.

**Revendications**

1. Dispositif formant palette porte-pièce à usiner, du type comprenant des vérins à fluide comprimé (102, 140) incorporés dans la palette (1); des moyens de fixation par serrage ou bridage de la pièce sur la face supérieure (2) de la palette (1) par l'intermédiaire des vérins; un générateur de pression de fluide (6) alimentant les vérins à travers un circuit de fluide comprimé (14, 16, 18, 20); et une source de puissance (24) d'actionnement du générateur de pression de fluide caractérisé en ce que le générateur de pression de fluide (6) et la source de puissance (24) sont chacun incorporé dans un logement ou évidemment correspondant (9, 26) pratiqué dans la palette (1); en ce que le circuit de fluide comprimé comprend un circuit intégré formé par des canaux communiquants (14, 16, 18, 20) réalisés dans la masse de la palette (1), le générateur de pression de fluide (6) étant télécommandé par un poste central de commande séparé (201) à dispositif de liaison par rayons infra-rouge (206).

2. Dispositif selon la revendication 1, caractérisé en ce que le générateur de pression (6) est un groupe électro-hydraulique (8, 10) constitué par un groupe moto-pompe.

3. Dispositif selon la revendication 1 ou 2, caractérisé en ce que la source de puissance (24) est constituée par des batteries d'accumulateur électrique rechargeables.

4. Dispositif selon la revendication 1, caractérisé en ce qu'il comprend au moins un ensemble (110, 112) à clapets (114, 116, 118; 120, 122, 124) de délivrance dudit fluide comprimé à une pression déterminée individuellement associé à un desdits vérins (102, 104) de sorte que chaque vérin (102, 104) fonctionne à une presion indépendante de celle de fonctionnement des autres vérins et/ou à des moments différents.

5. Dispositif selon la revendication 4, caractérisé en ce qu'il comprend au moins deux ensembles (110, 112) à clapets précités par vérin (102, 104) de sorte que chaque vérin (102, 104) peut fonctionner au moins à deux pressions différentes.

6. Dispositif selon la revendication 4 ou 5, caractérisé en ce que chaque ensemble (110, 112) comprend trois clapets anti-retour (114, 116, 118; 120, 122, 124) dont deux (114, 118; 120, 124) sont pilotés de préférence par électro-aimant.

7. Dispositif selon l'une quelconque des revendications 4 à 6, comprenant un circuit de fluide comprimé comprenant un conduit d'alimentation (134) de fluide comprimé reliant la sortie du générateur de pression (106) alimenté en fluide depuis une réserve de fluide (136), à un ou plusieurs vérins (102, 104) et un conduit de retour (138) de fluide comprimé reliant la sortie dudit ou desdits vérins (102, 104) à ladite réserve de fluide (136), caractérisé en ce que chaque conduit d'alimentation (134) et de retour (138) est subdivisé respectivement en canaux d'alimentation (134a, 134b) et de retour (138a, 138b) de fluide à, et de, chaque ensemble précité (110, 112, respectivement).

8. Dispositif selon l'une des revendications 4 à 7, caractérisé en ce que chaque vérin (102, 104) est un vérin simple effet.

9. Dispositif selon l'une des revendications 4 à 7, caractérisé en ce que chaque vérin est un vérin double effet (170), chaque effet (171, 172) étant alimenté par un ensemble de délivrance précité (110, 112, figure 5).

10. Dispositif selon l'une des revendications 6 à 9, caractérisé en ce que chaque électro-aimant (126, 128; 130, 132) est actionné automatiquement en étant commandé par le poste central de commande (201) précité à dispositif de liaison par rayons infra-rouge.

11. Dispositif selon la revendication 10, caractérisé en ce que le poste central (201) est équipé d'une unité de traitement de l'information, de préférence un microprocesseur, adapté pour être relié soit à un dispositif de commande manuelle (204), soit à un centre de commande numérique tel qu'un automate programmable ou une machine à commande numérique (205).

12. Dispositif selon la revendication 11, caractérisé en ce que chaque ensemble précité comprend un capteur de pression (154; 156) émettant une information en relation à ladite pression, qui est transmise et prise en compte par l'unité de traitement de l'information précitée.

13. Dispositif selon l'une quelconque des revendications 4 à 12, caractérisé en ce que chaque ensemble (110, 112) est incorporé au dispositif porte-pièce autonome (2-3).

14. Dispositif selon la revendication 11, caractérisé ce que le dispositif de liaison par rayons infra-rouges (206) forme une voie de transmission de commande bi-directionnelle.

15. Dispositif selon la revendication 14, caractérisé en ce qu'au poste central (201) et au dispositif porte-pièce (202, 203) est associé un ensemble émetteur-récepteur de rayons infra-rouge, pour pouvoir établir les liaisons bi-directionnelles entre le poste central et le dispositif.

16. Dispositif selon l'une des revendications précédente, caractérisé en ce que la source de puissance (24), formée avantageusement par des batteries d'accumulateurs rechargeables, du dispositif porte-pièce (203) est connectable à une borne de rechargement (208) associée au poste central (201).

**Patentansprüche**

1. Werkstückpalette bildende Vorrichtung, der Gattung, die in der Palette (1) eingebaute Druckfluidzylinder (102, 104), Mittel zum Klemmen oder zum Flanschen des Werkstücks auf der oberen Seite der Palette (1) durch die Zylinder, einen die Zylinder durch einen Druckfluidkreis (14, 16, 18, 20) speisenden Fluiddruckgenerator (6) und eine Kraftquelle (24) zur Betätigung des Fluiddruckgenerators aufweist, dadurch gekennzeichnet, daß der Fluiddruckgenerator (6) und die Kraftquelle (24) jeweils in einer entsprechenden, in der Palette (1) gebildeten Aufnahme oder Aussparung (9, 26) eingebaut sind, und daß der Druckfluidkreis einen, aus in der Masse der Palette (1) gebildeten zusammenhängenden Kanälen (14, 16, 18, 20) bestehenden integrierten Kreis aufweist, wobei der Fluiddruckgenerator (6) von einem getrennten, eine Infrarotstrahlung-Vebindungsvorrichtung (206) aufweisenden Zentralsteuerstand (201) ferngesteuert wird.

2. Vorrichtung nach Anspruch 1, dadurch gekennzeichnet, daß der Druckgenerator (6) ein aus einem Pumpenaggregat gebildeten Elektrohydraulisches Aggregat (8, 10) ist.

3. Vorrichtung nach Anspruch 1 oder 2, dadurch gekennzeichnet, daß die Kraftquelle (24) aus wiederaufladbaren elektrischen Akkumulatorbatterien besteht.

4. Vorrichtung nach Anspruch 1, dadurch gekennzeichnet, daß sie wenigstens ein Aggregat (110, 112) mit Klappenventilen (114, 116, 118; 120, 122, 124) zur Lieferung des besagten Druckfluids bei einem bestimmten Druck aufweist, das mit einem der besagten Zylinder (102, 104) individuell verbunden ist, so daß jeder Zylinder (102, 104) bei einem vom Arbeitsdruck der anderen Zylinder unabhängigen Druck und/oder zu anderen Zeiten arbeitet.

5. Vorrichtung nach Anspruch 4, dadurch gekennzeichnet, daß sie wenigstens zwei besagte Klappenventilaggregate (110, 112) mit Zylindern (102, 104) aufweist, so daß jeder Zylinder (102, 104) wenigstens bei zwei verschiedenen Drucken arbeiten kann.

6. Vorrichtung nach Anspruch 4 oder 5, dadurch gekennzeichnet, daß jedes Aggregat (110, 112) drei Rückschlagventile (114, 116, 118; 120, 122, 124) aufweist, von denen zwei (114, 118; 120, 124), vorzugsweise von einem Elektromagnet gesteuert werden.

7. Vorrichtung nach einem der Ansprüche 4 bis 6, die einen, eine den Auslaß des mit Fluid aus einem Fluidbehälter (136) gespeisten Druckgenerators (106) mit einem oder mehreren Zylindern (102, 104) verbindende Druckfluidzuleitung (134) und eine den Auslaß des besagten oder der besagten Zylinder (102, 104) mit dem besagten Fluidbehälter (136) verbindende Druckfluidrückleitung (138) aufweisenden Druckfluidkreis aufweist, dadurch gekennzeichnet, daß jede Zuleitung (134) und Rückleitung (138) in Fluidzuführungskanäle (134a, 134b) bzw. in Rückführungskanäle (138a, 138b) zu, und aus jedem besagten Aggregat (110 bzw. 112) unterteilt ist.

8. Vorrichtung nach einem der Ansprüche 4 bis 7, dadurch gekennzeichnet, daß jeder Zylinder (102, 104) ein einfach wirkender Zylinder ist.

9. Vorrichtung nach einem der Ansprüche 4 bis 7, dadurch gekennzeichnet, daß jeder Zylinder ein doppelt wirkender Zylinder (170) ist, wobei jede Wirkung (171, 172) von einem besagten Lieferungsaggregat (110, 112, Figur 5) gespeist wird.

10. Vorrichtung nach einem der Ansprüche 6 bis 9, dadurch gekennzeichnet, daß jeder Elektromagnet (126, 128; 130, 132) automatisch betätigt wird, indem er vom besagten, eine Infrarotstrahlung-Verbindungsvorrichtung aufweisenden Zentralsteuerstand (201) gesteuert wird.

11. Vorrichtung nach Anspruch 10, dadurch gekennzeichnet, daß der Zentralstand (201) mit einer Informationsverarbeitungseinheit, vorzugsweise einem Mikroprozessor, ausgerüstet ist, der dazu angepaßt ist, entweder mit einer Handsteuerungsvorrichtung (240) oder mit einer digitalen Steuerungseinheit wie einem programmierbaren Automat oder einer digital gesteuerten Maschine (205) verbunden zu sein.

12. Vorrichtung nach Anspruch 11, dadurch gekennzeichnet, daß jedes besagte Aggregat einen Druckfühler (154; 156) aufweist, der eine mit dem besagten Druck in Verbindung stehende, mit der besagten Informationsverarbeitungseinheit übertragene und berücksichtigte Information erzeugt.

13. Vorrichtung nach einem der Ansprüche 4 bis 12, dadurch gekennzeichnet, daß jedes Aggregat (110, 112) in die die Werkstückpalette bildende Vorrichtung (2-3) eingebaut ist.

14. Vorrichtung nach Anspruch 11, dadurch gekennzeichnet, daß die Infrarotstrahlung-Verbindungsvorrichtung (206) einen zweiseitigen Steuerungsübertragungskanal bildet.

15. Vorrichtung nach Anspruch 14, dadurch gekennzeichnet, daß ein Infrarotstrahlungssendeempfangsaggregat mit dem Zentralstand (201) und mit der eine Werkstückpalette bildenden Vorrichtung (202, 203) verbunden ist, um den Zentralstand mit der Vorrichtung zweiseitig verbinden zu können.

16. Vorrichtung nach einem der vorangehenden Ansprüche, dadurch gekennzeichnet, daß die, vorzugsweise aus wieder aufladbaren Akkumulatorenbatterien bestehende Kraftquelle (24) der eine Werkstückpalette bildenden Vorrichtung (203) mit einer, mit dem Zentralstand (201) in Verbindung stehenden Nachladungsklemme (208) verbindbar ist.

## Claims

1. Workpiece palette-forming device, of the type comprising compressed fluid cylinders (102, 104) incorporated in the palette (1); means for the clamping or the flanging of the piece on the upper part (2) of the palette (1) through the medium of the cylinders; a fluid pressure generator (6) feeding the cylinders through a compressed fluid circuit (14, 16, 18, 20); and a power supply (24) for the operation of the fluid pressure generator characterized in that the fluid pressure generator (6) and the power supply (24) are each incorporated in a corresponding receptacle or recess (9, 26) made in the palette (1); and in that the compressed fluid circuit comprises an integrated circuit formed of two communicating channels (14, 16, 18, 20) made in the mass of the palette (1), the fluid pressure generator (6) being remote controlled by a separate control central unit (201) with an infrared ray connection device (206).

2. Device according to claim 1, characterized in that the pressure generator (6) is an electrohydraulic set (8, 10) formed of a motor-driven pump.

3. Device according to claim 1 or 2, characterized in that the power supply (24) is formed of rechargeable electric accumulator batteries.

4. Device according to claim 1, characterized in that it comprises at least one assembly (110, 112) with valves (114, 116, 118; 120, 122, 124) for the delivery of the said compressed fluid at a determined pressure individually associated with one of the said cylinders (102, l04) so that each cylinder (102, 104) works at a pressure which is independent from the working pressure of the other cylinders and/or at different times.

5. Device according to claim 4, characterized in that it comprises at least two aforesaid assemblies (110, 112) with valves and with cylinders (102, 104) so that each cylinder (102, 104) can work at at least two different pressures.

6. Device according to claim 4 or 5, characterized in that each assembly (110, 112) comprises three non-return valves (114, 116, 118; 120, 122, 124) of which two (114, 118; 120, 124) are driven preferably by an electromagnet.

7. Device according to any of claims 4 to 6, comprising a compressed fluid circuit comprising a compressed fluid feeding pipe (134) connecting the outlet of the pressure generator (106) fed with fluid from a fluid tank (136), to one or several cylinders (102, 104) and a compressed fluid return pipe (138) connecting the outlet of the said cylinder or cylinders (102, 104) to the said fluid tank (136), characterized in that each feeding- (134) and return pipe (138) is subdivided respectively into fluid feeding- (134a, 134b) and return channels (138a, 138b) to and from each aforesaid assembly (110, 112, respectively).

8. Device according to one of claims 4 to 7, characterized in that each cylinder (102, 104) is a simple effect cylinder.

9. Device according to one of claims 4 to 7, characterized in that each cylinder is a double effect cylinder (170), each effect (171, 172) being fed by an aforesaid delivery assembly (110, 112, Figure 5).

10. Device according to one of claims 6 to 9, characterized in that each electromagnet (126, 128; 130, 132) is automatically operated by being controlled by the aforesaid infrared ray connection device-control central unit (201).

11. Device according to claim 10, characterized in that the central unit (201) is equipped with a data processing unit, preferably a microprocessor, adapted to be connected either to a hand-operation device (204), or to a numerical control unit such as a programmable automaton or a numerical control machine (205).

12. Device according to claim 11, characterized in that each aforesaid assembly comprises a pressure sensor (154, 156) emitting an information in relation with the said pressure, which is transmitted and taken into account by the aforesaid data processing unit.

13. Device according to any of claims 4 to 12, characterized in that each assembly (110, 112) is incorporated in the autonomous workpiece palette (2-3).

14. Device according to claim 11, characterized in that the infared ray connection device (206) forms a bidirectional control transmission channel.

15. Device according to claim 14, characterized in that an infrared ray transmitter-receiver assembly is associated with the central unit (201) and with the workpiece palette (202, 203) in order to be in a condition to establish bidirectional connections between the central unit and the device.

16. Device according to one of the preceding claims, characterized in that the power supply (24), formed advantageously or rechargeable accumulator batteries, of the workpiece palette (203) can be connected· to a recharging terminal (208) associated with the central unit (201).

Fig. 4

Fig. 5

Fig. 6